# EUROPEAN PATENT APPLICATION

(11) **EP 4 575 834 A1**
(43) Date of publication of application: **25.06.2025**
(21) Application number: 23307293.3
(22) Date of filing: 20.12.2023
(51) Int. Cl.: G06F 16/80

(54) **READ-ONLY DATA STRUCTURE FOR ARCHIVING A SNAPSHOT OF A RDF DATASET INTO A FILE**

(71) Applicant: Dassault Systèmes, 78140 Vélizy-Villacoublay (FR)
(72) Inventor: ROULLIER, Alban, Vélizy-Villacoublay (FR); VALLET GLENISSON, Eric, Vélizy-Villacoublay (FR); LABBATE, Frédéric, Vélizy-Villacoublay (FR); SAHUT D'IZARN, Jean-Philippe, Vélizy-Villacoublay (FR)
(74) Representative: Bandpay & Greuter

(57) **Abstract**

The disclosure notably relates to a computer-implemented read-only data structure for archiving a snapshot of a RDF dataset into a file, the RDF dataset comprising one or more graphs, the read-only data structure that can be directly queried using all possible triple patterns of a SPARQL query engine. The data structure comprises an indexed list of the one or more graphs of the RDF dataset, for each graph of the RDF dataset, an indexed list of predicates, a dictionary mapping each RDF term of the dataset to a respective index and inversely, and for each predicate indexed in the indexed list of predicates of each graph, an adjacency matrix representing a group of tuples of the RDF dataset, thereby obtaining a complete representation of the RDF dataset that can be directly queried using all possible triple patterns of a SPARQL query engine.

## Description

### TECHNICAL FIELD

The disclosure relates to the field of computer programs and systems, and more specifically to a read-only data structure for archiving a snapshot of a RDF dataset into a file, modifying the snapshot, and querying the snapshot or the modified snapshot.

### BACKGROUND

The RDF specification has been published by the W3C to represent information as graphs using triples. The publication can be reached here *https:*//*www.w3.org*/*TR*/*rdf11-concepts*/*.* The core structure of the abstract syntax is a set of triples, each consisting of a subject, a predicate, and an object. A set of such triples is called an RDF graph. An RDF graph can be visualized as a node and directedarc diagram, in which each triple is represented as a node-arc-node link.

SPARQL is the query language for RDF data. Version 1.1 of SPARQL can be reached here *https:*//*www.w3.org*/*TR*/*sparql11-query*/*.* RDF is a directed, labeled graph data format for representing information in the Web. This specification defines the syntax and semantics of the SPARQL query language for RDF. SPARQL can be used to express queries across diverse data sources, whether the data is stored natively as RDF or viewed as RDF via middleware. SPARQL contains capabilities for querying required and optional graph patterns along with their conjunctions and disjunctions. SPARQL also supports aggregation, subqueries, negation, creating values by expressions, extensible value testing, and constraining queries by source RDF graph. The results of SPARQL queries can be result sets or RDF graphs.

RDF knowledge graphs are formed by connecting triples to create a network or graph of information. They can be very large, up to several hundred billion triples, e.g., Uniprot (100 billion of triples), Wikidata (17 billion of triples), 3DS SIEM (up to 500 billion of triples). Therefore, having the entire graph in memory thus becomes either impossible or very costly.

Experimentations have shown that large parts of these RDF knowledge graphs are read-only or at least rarely modified and not in a highly concurrent fashion. In the world of relational databases, this is referred to as OLAP use cases. OLAP allows to provide quick and interactive access to aggregated, summarized, and calculated data, allowing users to explore and analyze complex datasets easily. OLAP stands for Online Analytical Processing and is for example discussed here: *https:*//*en.wikipedia.org*/*wiki*/*Online_analytical_processing.*

In real world scenarios, like for OLAP in SQL as seen in the well-known TPC-H benchmark that can be reached here: *https:*//*www.tpc.org*/*tpch*/*default5.asp,* there are still small write modifications that are done concurrently to read queries. A typical use case in the industry is sparce write requests can be sent to a large RDF knowledge graph storing chemical formulae, while most of the stored formulae do not need to be changed.

In the field of relational databases is known Apache Parquet (https://parquet.apache.org/) that is an open source, column-oriented data file format designed for efficient data storage and retrieval. It provides efficient data compression and encoding schemes with enhanced performance to handle complex data in bulk. Apache Parquet is built to support very efficient compression and encoding schemes. Multiple projects have demonstrated the performance impact of applying the right compression and encoding scheme to the data. Parquet allows compression schemes to be specified on a per-column level and is future-proofed to allow adding more encodings as they are invented and implemented. The target of Apache Parquet is relational data and not graph data; yet it highlights the need for very efficient data compression and encoding schemes.

Still in the field of relational databases is also known Apache Arrow (*https:*//*arrow.apache.org*/*docs*/*index.html*). Compared to Apache Parquet, compression schemes are not used but rather relies on a zero-copy shared memory.

In the field of graph databases, RDF HDT (Header-Dictionary-Triples) is a W3C Submission (*http:*//*www.w3.org*/*Submission*/*2011*/*03*/) for a binary format (also referred to as HDT file format) for publishing and exchanging RDF data at large scale. Its compact representation allows storing RDF in fewer space, while providing direct access to the stored information. This is achieved by depicting the RDF graph in terms of three main components: Header, Dictionary and Triples. The Header includes extensible metadata required to describe the RDF dataset and details of its internals. The Dictionary organizes the vocabulary of strings present in the RDF graph by assigning numerical IDs to each different string. The Triples component depicts the structure of the underlying graph in a compressed form.

HDT has not gone beyond the submission stage. HDT was originally devised as binary serialization format for transferring RDF data, but it has been used as RDF compressor due to its compactness. As just a binary format, HDT allowed for only basic retrieval, and was later extended by various variations that changed the tradeoff read performance/write performance/memory used.

HDT++ is a variant of HDT, and improves HDT compression ratios, but it does not retain the original HDT retrieval capabilities.

iHDT++ is an extension of HDT and is discussed in Hernández-Illera, A., Martinez-Prieto, M.A., Fernández, J.D. and Fariña, A., 2020. iHDT++: improving HDT for SPARQL triple pattern resolution. Journal of Intelligent & Fuzzy Systems, 39(2), pp.2249-2261 and also discussed in Hernández-Illera, A., Martinez-Prieto, M.A. and Fernández, J.D., 2015, April. Serializing RDF in compressed space. In 2015 Data Compression Conference (pp. 363-372). IEEE [5]. iHDT++ enables triple pattern support for SPARQL resolution.

HDTFoQ is another extension of HDT, and it is discussed in Martinez-Prieto, M.A., Arias Gallego, M. and Fernández, J.D., 2012. Exchange and consumption of huge RDF data. In The Semantic Web: Research and Applications: 9th Extended Semantic Web Conference, ESWC 2012, Heraklion, Crete, Greece, May 27-31, 2012. HDTFoQ is a variation regarding full SPARQL queries, yet its main drawback is that the algorithm in read is too costly and does not scale to big RDF knowledge graphs, e.g. the RDF knowledge graphs comprises billions of triples.

HDT++ and iHDT++ are both based on the assumption of an organization "object-like". For example, each subject must be in only one "family" of predicates. "Basic" HDT does not support all access patterns, only by subject. This is a strong limitation.

Hence, HDT was primarily designed as a binary format for publishing and exchanging RDF data at large scale, not to answer SPARQL queries. That is why there is this primary assumption that the organization of all triples must be by subject. Subsequent attempts to bring HDT to SPARQL come with limitations that make it incompatible to query very large RDF knowledge datasets (e.g. billions of triples). HDT optimizes greatly the memory/storage used, at the cost of read (and write/generation) performances: efficient data storage but not retrieval. The so-called RUM conjecture (Read Update Memory) is discussed in the document M. Athanassoulis, M. S. Kester, L. M. Maas, R. Stoica, S. Idreos, A. Ailamaki, M. Callaghan. Designing Access Methods: The RUM Conjecture. In proceedings of the 19th International Conference on Extending Database Technology (EDBT), March 15-18, 2016 - Bordeaux, France, and this document concludes that creating the ultimate access method is infeasible as certain optimization and design choices are mutually exclusive. Another trade-off is needed, with a less compressed format, but that enables fast read access for SPARQL queries that are not limited to "retrieval by subject".

Known solutions in the art propose data compression techniques (https://en.wikipedia.org/wiki/Data_compression) to reduce the size of storage (e.g., in a memory or on a disk) for RDF graph databases. Such compression techniques serve to reduce storage cost (e.g., hardware cost) and environmental footprint in various applications, notably in cloud deployment.

Document ÁLVAREZ-GARCÍA, S., et al., "Compressed vertical partitioning for efficient RDF management.", Knowledge and Information Systems, 2015, vol. 44, no 2, p. 439-474, discloses an RDF indexing technique that supports SPARQL solution in compressed space. The disclosed technique, called k2-triples, uses the predicate to vertically partition the dataset into disjoint subsets of pairs (subject, object), one per predicate. These subsets are represented as binary matrices of subjects × objects in which 1-bits mean that the corresponding triple exists in the dataset. This model results in very sparse matrices, which are efficiently compressed using k2-trees.

Document CHATTERJEE, A., et al., "Exploiting topological structures for graph compression based on quadtrees.", In: 2016 Second International Conference on Research in Computational Intelligence and Communication Networks (ICRCICN). IEEE, 2016. p. 192-197, discloses algorithms that take into consideration the properties of graphs, and perform compression based on quadtrees. Furthermore, techniques to both compress data and also perform queries on the compressed data itself are introduced and discussed in detail.

Document NELSON, M., et al., "Queryable compression on streaming social networks.", In: 2017 IEEE International Conference on Big Data (Big Data). IEEE, 2017. p. 988-993, discloses the use of a novel data structure for streaming graphs that is based on an indexed array of compressed binary trees that builds the graph directly without using any temporary storage structures. The data structure provides fast access methods for edge existence (does an edge exist between two nodes?), neighbor queries (list a node's neighbors), and streaming operations (add/remove nodes/edges).

Document Pelgrin, O., Taelman, R., Galárraga, L. and Hose, K., GLENDA: Querying over RDF Archives with SPARQL, mentions that "RDF datasets on the Web are consistently evolving. The simplest way to keep track of the history of RDF data is to store each revision of the dataset as an independent copy. This, however, can be prohibitive for large RDF datasets with long histories. This observation has led to the emergence of more efficient methods to manage, i.e., store and query, large RDF Archives."

The aim of RDF archives is different from HDT alone: tracking the history of RDF data and be able to query its history by keeping track of an RDF graph's change history. Applications are different as seen in Pelgrin, O., Taelman, R., Galárraga, L. and Hose, K., 2023, February. Scaling Large RDF Archives To Very Long Histories. In 2023 IEEE 17th International Conference on Semantic Computing (ICSC) (pp. 41-48), e.g., version control, mining of temporal and correction pattern, temporal data analytics, or query the past and study the evolution of a given domain of knowledge. RDF archives need to tackle very large knowledge graphs that can be updated with batches of millions of triples or from continuous updates. The technique used to be able to ingest, store, and query long revision histories on very large RDF graphs is a combination of dataset snapshots and sequences of aggregated changesets - called delta chains in the literature. The solution proposed is based on multiple delta chains where full snapshots are interposed between change sets when the history becomes too long. All of these refer to only one dataset: the one dataset whose history is tracked.

In the document *Scaling Large RDF Archives To Very Long Histories:* "the snapshot is stored as an HDT file, whereas the delta chain is materialized in two stores: one for additions and one for deletions. Each store consists of three indexes in different triple component orders, namely SPO, OSP, and POS, implemented as B+trees. Keys in those indexes are individual triples linked to version metadata, i.e., the revisions where the triple is present and absent. Besides the change stores, there is an index with addition and deletion counts for all possible triple patterns, e.g., 〈 ?s, ?p, ?o 〉 or 〈 ?s, cityln, ?o〉 , which can be used to efficiently compute cardinality estimations - particularly useful for SPARQL engines. As common in RDF stores, RDF terms are mapped to an integer space to achieve efficient storage and retrieval. Two disjoint dictionaries are used in each delta chain: the snapshot dictionary (using HDT) and the delta chain dictionary. Hence, our multi-snapshot approach uses D × 2 (potentially non-disjoint) dictionaries, where D is the number of delta chains in the archive. The ingestion routine depends on whether a revision will be stored as an aggregated delta or as a snapshot. For revision 0, our ingestion routine takes as input a full RDF graph to build the initial snapshot. For subsequent revisions, we take as input a standard changeset, and use OSTRICH to construct an aggregated changeset of the form us,k, where revision s = snapshot(k) is the latest snapshot in the history. When the snapshot policy decides to materialize a revision s' as a snapshot, we use the aggregated changeset to compute the snapshot efficiently."

The approach of the document *Scaling Large RDF Archives To Very Long Histories* has two main drawbacks. Firstly, materializing the delta chain requires querying the dictionary of the snapshot, which is not good to generate it near real time. Secondly, the snapshot is based on HDT, which is not good to answer SPARQL queries efficiently on large datasets, as discussed above.

Within this context, there is still a need for a fast read access on very large, compressed RDF archives that can be incrementally updated, e.g. add and/or delete of triples. This read access must answer efficiently to SPARQL queries, to all possible triple patterns. The incremental update must be near real-time whatever the size of the RDF knowledge graph.

### SUMMARY

It is therefore provided a computer-implemented read-only data structure for archiving a snapshot of a RDF dataset into a file, the RDF dataset comprising one or more graphs, the read-only data structure that can be directly queried using all possible triple patterns of a SPARQL query engine. The data structure comprises an indexed list of the one or more graphs of the RDF dataset; for each graph of the RDF dataset, an indexed list of predicates; a dictionary mapping each RDF term of the dataset to a respective index and inversely; for each predicate indexed in the indexed list of predicates of each graph, an adjacency matrix representing a group of tuples of the RDF dataset, thereby obtaining a complete representation of the RDF dataset that can be directly queried using all possible triple patterns of a SPARQL query engine.

The method may comprise one or more of the following:
- the dictionary has a fixed length when each value of the dictionary has a length that is equal or smaller than a predetermined threshold, preferably the predetermined threshold is 2, 4 or 8 Bytes;
- the dictionary has a variable length when at least one value of the dictionary has a length larger than the predetermined threshold, each value having a length larger than the predetermined threshold is indexed to and stored in an overflow data structure, the overflow data structure being part of the dictionary;
- at least parts of the dictionary are encoded, preferably values are encoded using the IEEE Standard for Floating-Point Arithmetic (IEEE 754-2019 or previous versions) or prefix of values are encoded using a hexadecimal key;
- the dictionary comprises two or more dictionaries, preferably each dictionary maps each RDF term of a RDF datatype of the dataset to a respective index and inversely or each dictionary maps each RDF term of an IRI prefix of the dataset to a respective index and inversely;
- the adjacency matrix for each indexed predicate is obtained by performing a vertical partitioning for each predicate of the RDF database, preferably the vertical partitioning is performed by a technique selected among: a standard K2-triple, preferably built from a Dynamic K2; two static B+trees, where a first static B+tree expresses subject-to-object (S,O) correspondence and the second one expresses object-to-subject (O,S) correspondence; a static XAM Tree engraved from a XAMTree as a read-only XAMTree;
- each entry of the data structure has a maximum size comprised between 32 and 256 bits, preferably between 32 bits or 64 bits, more preferably the size of each entry is encoded on 32 bits or 64 bits;
- the read-only data structure is a binary file comprising: a Header comprising an offset to an end of a Footer record position; a section comprised between the Header and the Footer; the Footer comprising an offset to a starting of the Header record position; wherein the section stores: the dictionary; for each graph, the indexed list of predicates of the graph and the adjacency matrix of each predicate indexed in the indexed list of predicates of the graph;

It is further provided a computer-implemented method for storing modifications to be applied on the above read-only data structure. The method comprises obtaining a first list of added and/or deleted tuples of the RDF dataset; computing a first read-only data structure defined hereinabove, wherein for each predicate of the added and/or deleted tuples of the RDF dataset of the first list: a first adjacency matrix represents the added tuples of the RDF dataset comprising the same predicate; and/or a second adjacency matrix represents the deleted tuples of the RDF dataset comprising the same predicate; and storing the computed read-only data structure into a first file.

The method may further comprise:
- obtaining a second list of added and/or deleted tuples of the RDF dataset; computing a second read-only data structure defined hereinabove, wherein for each predicate of the added and/or deleted tuples of the RDF dataset of the first and second lists: a first adjacency matrix represents the added tuples of the RDF database comprising the same predicate; and/or a second adjacency matrix represents the deleted tuples of the RDF database comprising the same predicate; and storing the computed read-only data structure into a second file, thereby by forming modifications to be applied on the read-only data structure;

- the obtaining further comprises obtaining a list of added and/or deleted tuples of the RDF dataset for each graph of the RDF set; and wherein the computing comprises computing a first adjacency matrix and second adjacency matrix for each graph of the RDF set;
- computing a mapping between the indices of the dictionary of the RDF dataset and the indices of each dictionary of each list of added and/or deleted tuples of the RDF dataset; and storing into a file the computed mapping.

It is further provided a computer-implemented method of SPARQL querying on a read-only data structure stored into a file and on a computed read-only data structure stored into a first file according, comprising: obtaining a SPARQL query by a SPARQL query engine, the SPARQL query comprising at least one triple pattern; obtaining the read-only data structure and the computed read-only data structure stored into a file; for each triple pattern of the query, finding the tuples answering to the triple pattern of the query into the data structure according to anyone of claims 1 to 8, thereby obtaining a first set of results; and for each triple pattern of the query, in the computed read-only data structure into a file: determining if tuples answering the triple pattern are to be deleted and/or added; if tuples are to be deleted, removing the tuples from the first set of results; if tuples are to be added, adding the tuples to the first set of results.

It is further provided a computer program comprising instructions for performing the method for storing modifications to be applied on the above read-only data structure and/or the method of SPARQL querying.

It is further provided a computer readable storage medium having recorded thereon the computer program.

It is further provided a system comprising a processor coupled to a memory and a graphical user interface, the memory having recorded thereon the computer program.

It is further provided a device comprising a data storage medium having recorded thereon the computer program. The device may form or serve as a nontransitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- **FIG. 1** is an example of a full representation of a read-only data structure;
- **FIG. 2** shows an example of a flowchart of a method for storing modifications to be applied on a read-only data structure;
- **FIG. 3** shows an example of a flowchart of a method of SPARQL querying on a read-only data structure;
- **FIG. 4** is an example of a system;
- **FIGs. 5** to **10** are screenshots of an example of command for performing the method of **FIG.3****;** and
- **FIG. 11** shows performance comparison with sample queries on the read-only data structure.

### DETAILED DESCRIPTION

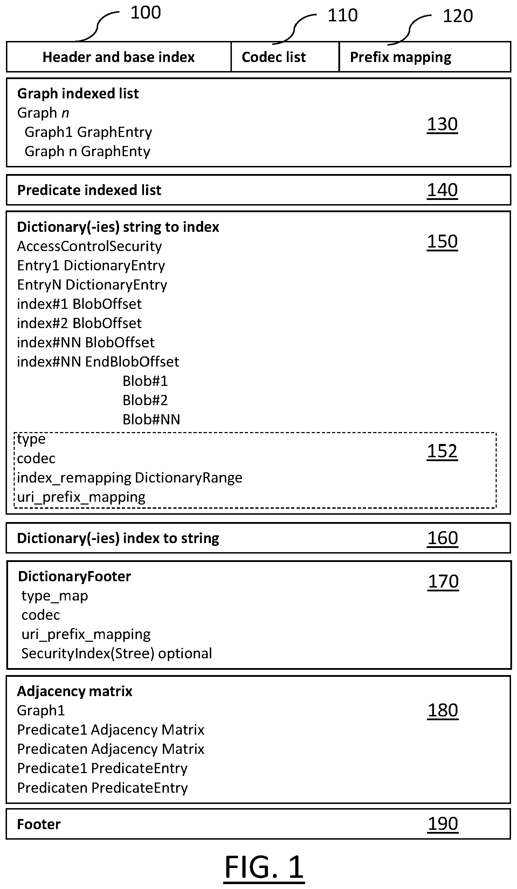

In reference to **FIG. 1**, an object of the present invention is to propose a read-only data structure for archiving a snapshot of an RDF dataset into a file. The RDF dataset comprises one or more graphs. The read-only data structure that can be directly queried using all possible triple patterns of a SPARQL query engine. The data structure comprises an indexed list **(130)** of the one or more graphs of the RDF dataset. For each graph of the RDF dataset, the data structure further comprises an indexed list (**140**) of predicates. The data structure also comprises a dictionary (**150, 160**) mapping each RDF term of the dataset to a respective index and inversely. In addition, the data structure comprises, for each predicate indexed in the indexed list of predicates of each graph, an adjacency matrix **(170)** representing a group of tuples of the RDF dataset, thereby obtaining a complete representation of the RDF dataset that can be directly queried using all possible triple patterns of a SPARQL query engine.

Such a data structure provides a read-only data structure that improves the archiving of a snapshot of a RDF dataset into a file. By "improving the archiving", it is meant that the data structure stores the RDF dataset in a compressed format that decreases the overall size of the RDF dataset. Indeed, the archive uses succinct data structures for its graph data representation, and it can be stored in a very efficient way on disk. One reminds that a succinct data structure is a data structure which uses an amount of space that is "close" to the information-theoretic lower bound, but still allows for efficient query operations, unlike other compressed representations. Hence, the index list of predicates for each graph, the use of dictionaries and adjacency matrices for each predicate contribute to decrease the overall size of the archive. In addition, the compression can be improved by using dedicated encoders for one or more of these succinct data structures, e.g., the dictionary(ies) can be compressed.

In addition, the archive provided by the read-only data structure defines an RDF file/memory format targeted for efficient retrieval and data storage. By supporting zero-copy reads, it allows lightning-fast and resource efficient data access without serialization overhead. The archive is generated once and can be read many times. The archive is self-describing, and it can be mapped in one shot. The archive file describes an RDF dataset, and it can be seen as a kind of indexed triG file - trig files are discussed here *https:*//*www.w3.org*/*TR*/*trig*/*-.* Thus, the archive provided by the read-only data structure can be used for long-term persistency and its organization allows reading data without any transformation (e.g., no need of serialization).

Furthermore, the data structure of the archive is based on state-of-the-art for graph representation that enables full SPARQL support. Hence, read access can answer efficiently to SPARQL queries, to all possible triple patterns: the eight different triple patterns possible in the SPARQL queries. Such eight triple patterns include (S,P,O), (S,?P,O), (S,P,?O), (S,?P,?O), (?S,P,O), (?S,?P,O), (?S,P,?O), and (?S,?P,?O) in which variables are preceded in the pattern, by the symbol ?. Variables are the output of triple patterns and may be the output of the SPARQL query.

Last but not least, the read-only data structure can comprise one or more graphs, and as a consequence, the read-only data structure according to the invention is compliant with the provision of RDF 1.1 recommendations - discussed here *https:*//*www.w3.org*/*TR*/*rdf11-concepts*/*-.* Beside a compliance with the recommendation, this allows to implement and use the read-only data structure on current RDF datasets that are most of the time multigraphs. In other words, the read-only data structure addresses an industrial problem, which is archiving read-only multi-graph RDF datasets.

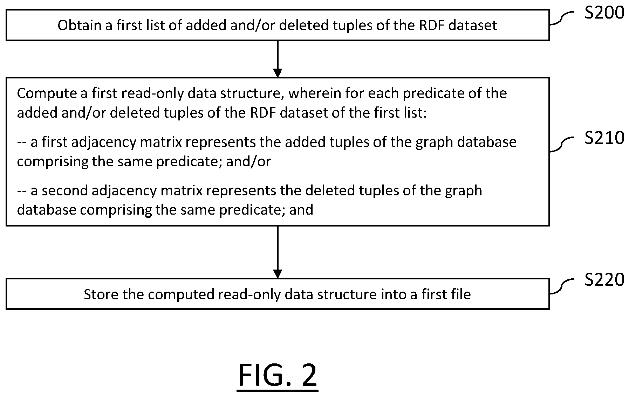

Referring now to **FIG.** 2, it is also proposed a computer-implemented method for storing modifications to be applied on the above discussed read-only data structure. As introduced above, one of the requirements is obtaining a read-only data structure that is able to ingest incremental updates near real-time. To that aim, the method for storing modification to be applied on the read-only data structure according to the invention comprises obtaining **S200** a first list of added and/or deleted tuples of the RDF dataset; the tuples are thus the modifications to be applied on the archive. Then, a first read-only data structure is computed **S210.** This first read-only data structure that is similar to the one discussed herein above, but when building the first read-only data structure, for each predicate of the added and/or deleted tuples of the RDF dataset of the first list, a first adjacency matrix represents the added tuples of the graph database comprising the same predicate, and/or a second adjacency matrix represents the deleted tuples of the graph database comprising the same predicate. The method also comprises storing **S220** the computed read-only data structure into a first file. The snapshot of the first list of added and/or deleted tuples of the RDF dataset is archived into a file, which is a read-only data structure.

Such a method allows to update the read-only data structure of the invention. The update relies on the computation of a first read-only data structure that reflects the changes (the add and/or remove tuples) to apply to the read-only data structure (the archive). This first read-only data structure is similar to the delta files of RDF archiving in terms of function: the archive - the snapshot of an RDF dataset into a file -, is followed by one or more delta files where the one or more delta files form a delta chain. The snapshot and the delta chain are built with the same read-only data structure. Interestingly, the one or more delta files inherit the qualities of the read-only data structure that have been discussed previously. Notably, the read-only data structure enables fast read access for SPARQL queries. In addition, the computing of a delta file is near real-time since it does not require accessing the snapshot file, and therefore is independent of the size of the RDF dataset (the full graph).

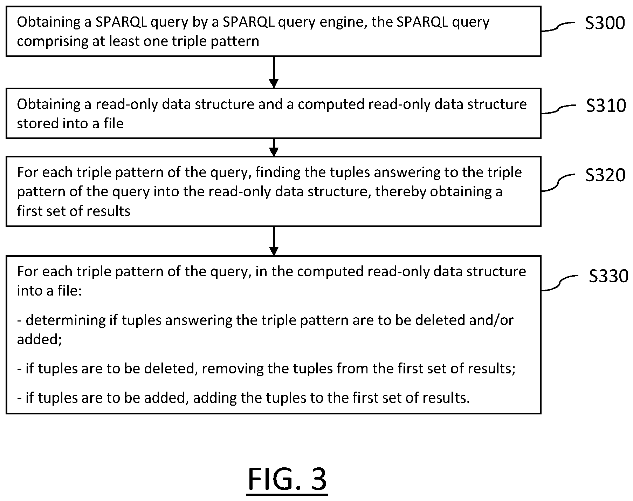

Referring now to **FIG. 3****,** it is also proposed a computer-implemented method of SPARQL querying on the read-only data structure stored into a file (the archive), and the computed read-only data structure (the first file or delta file). The method comprises obtaining **S300** a SPARQL query by a SPARQL query engine, the SPARQL query comprising at least one triple pattern. Next, are obtained **S310** the read-only data structure for archiving a snapshot of an RDF dataset into a file, and the computed read-only data structure stored into a first file. In other words, the snapshot file of the RDF dataset is obtained and the delta file, which is a read-only data structure according to the invention, is obtained too. For each triple pattern of the query **S320,** the tuples answering to the triple pattern of the query are found into the read-only data structure (snapshot file of the RDF dataset), thereby obtaining a first set of results. For each triple pattern of the query **S330,** in the computed read-only data structure into the first file, the following step are performed: i) determining if tuples answering the triple pattern are to be deleted and/or added; ii) if tuples are to be deleted, removing the tuples from the first set of results; iii) if tuples are to be added, adding the tuples to the first set of results.

A combination of the snapshot file of the RDF dataset and the delta file is provided to the SPARQL query engine in one unified logical view to be able to answer SPARQL queries with natively good performances - contrary to HDT discussed in the background section where additional data structures were added afterwards to try to palliate bad read performances-. Hence, a fast read access is made possible on compressed RDF archives that are incrementally updated in near real-time.

The read-only data structure and the methods are computer-implemented. This means that read-only data structure and the steps of the methods (or substantially all the steps) are executed/used by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database, e.g., by using memory-map. The memory is any hardware adapted for such storage, possibly comprising several physical distinct parts (e.g. one for the program, and possibly one for the database).

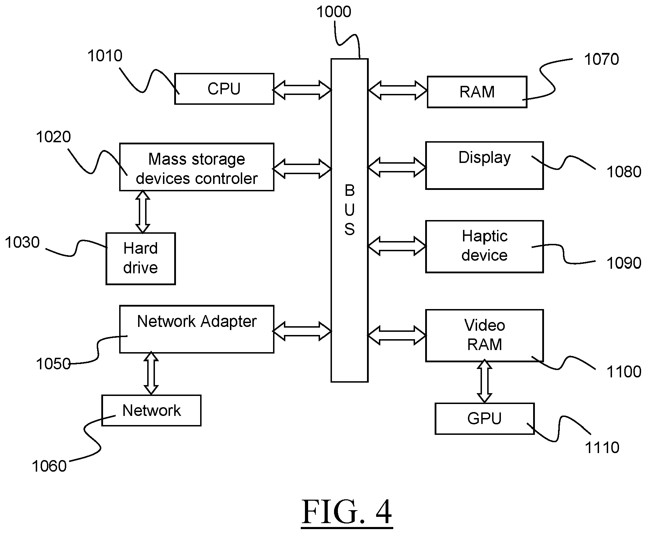

**FIG. 4** shows an example of the system, wherein the system is a client computer system, *e.g*. a workstation of a user. The system can be used for building, maintaining, storing, using the read-only data structure, and/or the system can be used for performing the method for storing modifications to be applied on the read-only data structure and/or the method of SPARQL querying on the read-only data structure and the computed read-only data structure stored into the first file.

The client computer of the example comprises a central processing unit (CPU) **1010** connected to an internal communication BUS **1000,** a random-access memory (RAM) **1070** also connected to the BUS. The client computer is further provided with a graphical processing unit (GPU) **1110** which is associated with a video random access memory **1100** connected to the BUS. Video RAM **1100** is also known in the art as frame buffer. A mass storage device controller **1020** manages accesses to a mass memory device, such as hard drive **1030.** Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter **1050** manages accesses to a network **1060.** The client computer may also include a haptic device **1090** such as cursor control device, a keyboard or the like. A cursor control device is used in the client computer to permit the user to selectively position a cursor at any desired location on display **1080.** In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

A computer program may comprise instructions executable by the computer system, the instructions comprising means for causing the above system to perform the building, maintaining, storing, using of the read-only data structure, and/or performing the method for storing modifications to be applied on the read-only data structure and/or SPARQL querying on the read-only data structure and the computed read-only data structure stored into the first file.

The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

Examples of the read-only data structure are now discussed, in reference to **FIG. 1** that shows one of these examples. In the rest of the description the read-only data structure will be equivalently referred to as ROSA file, archive. ROSA stands for Read-Only Semantic Archive. A ROSA file (or ROSA archive) is constituted of only one file. The ROSA file comprises several sections, a set of these sections defining the organization of the ROSA file. It is to be understood that the ROSA file represented on FIG. 1 illustrates an example that is non limitative, and that the position of the sections may be changed without modifying the invention. In another example of FIG. 1, the section 130 may be placed between the sections 180 and 190, and the section 140 may be located just after section 180. Hence, at the time of generating the ROSA file, the section 140 is generated after each adjacency matrix set - Graph1 ... Graph n) relating to a graph of the section 180, and the section 130 is generated just before the generation of the Footer section 190. This order allows a one pass generation of the ROSA file.

The division of the ROSA file on sections enables the fact that memory map may be used to have the same layout on disk and on memory, and to memory-map the file in memory at open. Memory-map is well known, and a discussion of memory-map can be reached here: *https:*//*en.wikipedia.org*/*wiki*/*Memory_map.* It is to be understood that memory-map is an optimization, and any other memory layout may be used without changing the invention. Once ROSA file is memory-mapped, only a few handles and necessary internal data structures may be loaded: the codec list, the graph indexed list and the type of map. The ROSA file is intended to be mapped, but it may be interesting to be able to manipulate this kind of file in streaming to perform filtering. For instance dropping some predicates or graphs. It is possible to make some tool that may transform some ROSA archive, to add or remove some section. It is quite easy to write a utility that removes a predicate or a graph and generates a new ROSA archive. This could be done without changing the invention.

In the examples, the ROSA file comprises at least the following data structures:
i) the indexed list **130** of the one or more graphs of the RDF dataset;
ii) for each graph of the RDF dataset, an indexed list **140** of predicates of the graph;
iii) a dictionary **150** mapping each RDF term of the dataset to a respective index and inversely **160;**
iv) for each predicate indexed in the indexed list of predicates of each graph, an adjacency matrix **180** representing a group of tuples of the RDF dataset.

These data structures are now discussed.

As known *per se,* the dictionary is a data structure that maps each RDF term of the dataset to a respective index. Inversely, the dictionary also maps each index to a respective RDF term of the dataset. Hence, the "dictionary" for the graph database is a mapping, i.e., an encoding or an indexing, which maps each stored ID in the database (e.g., IDs stored as RDF triples) to a respective content. A dictionary is used to provide indexes to RDF triples storage to help optimize the persistence of information which may be vastly repetitive. In the context of RDF (Resource Description Framework), a "term" refers to a basic unit of information or an element used in RDF statements (triples). Each term in RDF can serve as subjects, predicates or objects of triples. There are three types of terms in RDF: subjects, predicates, and objects. There can be three kinds of nodes in an RDF graph: IRIs, literals, and blank nodes, as discussed for example here https://www.w3.org/TR/rdf11-concepts/. Each term may be identified by an IRI (Internationalized Resource Identifier) that permits a wider range of Unicode characters, or a literal value (such as strings or numbers). The subject is the resource about which a statement is made. It is the "thing" or "entity" that the RDF triple describes. The predicate is the property or relationship that links the subject to the object. It defines the nature of the relationship between the subject and the object. And the object is the value or the target of the statement; It can be another resource or a literal value (such as a string, number, or date). An RDF triple is thus formed by a combination of these terms (subject, predicate, object).

The dictionary is the most complex data structure in ROSA. Indeed, the terms that are indexed therein can considerably vary in size, which has a strong impact on the organization of the dictionary data structure. Thus, the dictionary's implementations may be adapted to the terms found in the RDF dataset; This will improve the performances of the dictionary.

In examples, the dictionary may have a fixed length when each value of the dictionary has a length that is equal or smaller than a predetermined threshold, or smaller than the predetermined threshold. When the dictionary fits under the threshold (e.g., a number of Bytes), a fixed size dictionary can be implemented where all data fit inside a unified data structure. A fixed size dictionary saves memory usage by allocating a fixed amount of space for each entry of the dictionary. This reduces the need for dynamic memory allocation and resizing, which can be more memory efficient. A fixed size dictionary further saves indirection costs, the overhead associated with accessing data indirectly through pointers or references.

The fixed size dictionary may be made of one vector of values called "master", where each value has a maximum length fixed to the threshold. The vector is thus an array. The position of the value inside the vector is the index of this value. It is still mandatory for the value to have a size under the threshold, since the value is kept in-place inside the vector. To build this kind of dictionary, it may be possible to build it in memory and then write it in the ROSA file without any need of transformation.

In examples, the predetermined threshold may be 2, 4 or 8 Bytes, which means that the terms indexed in the dictionary have a size that do not exceed (or equal) 2, 4or 8 Bytes. The choice of a value may depend on one or more parameters, e.g., characteristics of the data and requirements of the system. Can be taken into account, but not limited to, the characteristics of the storage medium (e.g., hard disk drive, solid-state drive), the characteristics of the memory of the system, the future growth, and changes in data patterns, ...

In examples, the dictionary may have a variable length, e.g., when at least one value of the dictionary has a length larger than the predetermined threshold. The variable-length dictionary comes with additional data structures: each value of the dictionary having a length larger than the predetermined threshold is indexed to and stored in an overflow data structure. The overflow data structure is part of the dictionary, which means that the overflow data structure may be seen as a sub data structure of the dictionary's data structure. In this example, and as in the example regarding the fixed-length dictionary, the predetermined threshold may be 2, 4 or 8 Bytes. The choice of a value may also depend on one or more parameters.

For a variable length dictionary, a same "master" vector may be used. Each time the value is above the threshold, instead of writing all the value in-place, a reference to another vector, called "blob", where the overflow is written. The index is still given by the position in the "master" vector, but the indirection has to be check in order to get the whole value. In an example to create this kind of dictionary, in a first step, the "master" and "blob" vectors may be built in memory, and in a second step they may be copied in the ROSA file along with an array of offsets computed by the accumulated size of all "blob" vectors. For example, if the maximum value fits in an unsigned 32bits integer, it may be dumped as an array of unsigned 32bits integer; otherwise, a 64bits unsigned integer array may be used, and this 64bits unsigned integer array may be referenced in a master section of an entry of the dictionary.

In example, the dictionary may be entirely or partly encoded, e.g., the index and/or the values are encoded. Any type of encoding may be used. In examples values may be encoded using the IEEE Standard for Floating-Point Arithmetic (IEEE 754-2019 or previous versions): a double or a float number can be represented with a normalized memory layout and the normalization may rely on the IEEE 7542019 or previous versions (https://en.wikipedia.org/wiki/IEEE_754) instead of a string holding its value as characters. This encoding can be used to optimize queries, for example filtering all values matching "x > 5". For example, if a dictionary is dedicated to all float values encoded with IEEE 754, by definition the dictionary will be a fixed size dictionary. In examples, one or more (even all) prefixes of the dictionary may be encoded using a respective hexadecimal key instead of copying the prefix in all values of the dictionary that start with this prefix; The prefixes define short abbreviations for long IRIs. IRI mapping codec can be used since IRI mapping codec is a special kind of codec dedicated to the prefixes. The mapping is a table containing the list of defined prefixes and provides the code associated with a type.

As discussed until now, it is possible to have one dictionary for all the values of all the triples of the RDF dataset to archive. In examples, the dictionary may comprise two or more dictionaries, that is, the dictionary may be split into several smaller dictionaries. In an example, each dictionary may map each RDF term of a RDF datatype of the dataset to a respective index and inversely; said otherwise one dictionary per RDF datatype (*https:*//*www.w3.org*/*TR*/*rdf11-concepts*/*#section-Datatypes*). In addition, or alternatively, each dictionary may map each RDF term of an IRI (acronym of Internationalized Resource Identifier) prefix of the dataset to a respective index and inversely; said otherwise, one for IRI (*https:*//*www.w3.org*/*TR*/*rdf11-concepts*/*#dfn-iri)* that may be additionally sharded with one per prefix (*https:*//*www.w3.org*/*TR*/*rdf11-concepts*/*#dfn-namespace-prefix*). In the examples where several dictionaries are used in the ROSA file, each dictionary may be either a fixed size dictionary or a variable length dictionary. The case where the dictionary comprises both fixed size and variable length dictionaries will be discussed hereinbelow.

It is to be understood that cases where the dictionary comprises two or more dictionaries do not change the principle of operations of the dictionary; in other words, the examples of dictionary discussed hereinabove apply.

In reference to **150, 160, 170** of **FIG. 1****,** examples of implementations of the dictionary are now discussed. Any implementation of the dictionary may be contemplated, while the dictionary maps each RDF term of the RDF dataset to a respective index. The dictionary is made of dictionary entries. A dictionary entry is defined by several elements: i) its type, e.g., either fixed size of variable length; ii) the data corresponding to its type, e.g., a "master" vector (or section) or a "master and "blob" vectors (or sections). This was already discussed.

In examples, the dictionary may comprise an entry with optional indexes like, e.g., for access control security. An adjust section may be present as an array of unsigned integer, e.g. an array of unsigned 16bits integer. The adjust section is used to remap dictionary-internal indexes to dataset indexes in the form of (64K)*(64K).

As represented on **150** of **FIG.1****,** the dictionary has N dictionary entries (*Entry1 DictionaryEntry... EntryN DictionaryEntry*), constituting the data of the dictionary.

In examples, metadata **152** describing the dictionary may be added. Metadata may comprise a *type* section indicating the type of the dictionary layout (fixed size or variable length). Metadata may also comprise the *codec* section that indicates the names of the codec used in this dictionary, if any. The metadata may further comprise an *index_remapping* section and a *DictionaryRange* array containing, for each 64K index, the type_map_id associated to the slice and the index remapping in the associated index. Index remapping serves the purpose of ensuring that the dictionary has a continuous index. The metadata may further comprise a IRI Mapping codec blob containing the list of all IRI encoding prefixes, which is referenced by *uri_prefix_mapping* in *Dictionary Footer. uri_prefix_mapping* may be stored indiffently in the Metadata section 152 or in the dictionary Footer 170.

As represented on **160** of **FIG.1****,** the inverse dictionary comprises its own data structure. The data structure of the inverse dictionary is similar to the one described hereinabove. In examples, the inverse dictionary may be appended to each (noninversed) dictionary, e.g. it may be implemented as an S-Tree<hash(e),index(e)> where S-tree comprises pairs of hash, index for each element (e). S-Tree data structure is discussed here https://en.algorithmica.org/hpc/data-structures/s-tree/. In example, the inverse dictionary may comprise an array of pair <hash(e),index(e)> sorted by hash.

The dictionary may comprise a Footer **170.** The Footer of the dictionary may be stored in a dedicated section **170** of the ROSA file as represented on **FIG. 1****.**

The Footer of the dictionary may comprise an array of DictionaryEntry, referenced by the *type_map* field in DictionaryFooter **170.** For each of these dictionary entries, there is an unsigned integer, e.g., of 32 bits index type_id from the type section referenced by the DictionnaryFooter and an unsigned integer, e.g. of 32 bits index codec_id from the codec section referenced by the DictionnaryFooter. The Footer of the dictionary may be also a bitmask called flags, indicating how to interpret the entry, holding one or more of the following values:
- FIXED_SIZE_DICTIONARY, specifies that only master is used because all blob in the dictionary have the same length, in this case the length field indicate the width;
- VARLENGTH_DICTIONARY, specifies that master section contains offset of the blob in the blob section, the length specify the width of indices (4 or 8);
- SHARDED_BY_HASH and SHARDED_BY_URI, indicates that the dictionary is sharded by RDFDataType function respectively of the hash of the decoded Blob and the Prefixld, thus allowing an organization of the dictionary into sub-dictionaries;
- Optional values may be added, e.g. if optional indexes are used also.

The DictionaryFooter **170** may also comprise a codec section, referencing an array of the used codec names, a type section, referencing an array of the used type names, an uri_prefix section, with a list of prefixes. Along with an index_remapping section, referencing an array of DictionaryRange used to identify type from index or the internal index in the according dictionary, a type_map section, referencing the array detailed hereinabove, and a count field with the number of entries in the dictionary.

When the dictionary is a variable length dictionary, a "master" vector and a "blob" vector may be used. In general about two third of the store size is related to these two sections. In practice, choosing only one layout is likely not the best choice, and for that reason a dictionary may contain both fixed and variable size records.

As said, fixed size dictionary may be modelized using a contiguous array, quite simple to generate. Variable length table may be a bit more complicated to generate. As represented in **150** of **FIG. 1****,** first part with an index is followed by the offset in the Blob part (noted *index#1 BlobOffset* in FIG. 1), and the last part by the end of the offset (noted *index#NN EndBlobOffset* in FIG. 1). The n^{th} Blob size is computed by substracting *index#N+1 BlobOffset to index#N BlobOffset.*

The data structure of the adjacency matrices is now discussed in reference to **180** in **FIG. 1****.** It is reminded that for each indexed predicate of each graph, an adjacency matrix representing a group of tuples of the RDF dataset is obtained. As shown in **FIG. 1**, for the Graph 1 of the RDF dataset, n predicates have been indexed **140** and each indexed predicate comes with an adjacency matrix.

As known *per se,* an adjacency matrix is a binary matrix (i.e., a matrix with elements with two values, e.g., 0 and 1) of a size related to the number of subjects, predicates, and/or objects, which 1-bits mean that the corresponding triple (e.g., of a respective predicate for the adjacency matrix) exists in the RDF dataset. The size of the adjacency matrix for a predicate may be the size of subjects times by objects of RDF tuples for said predicate.

An adjacency matrix is therefore obtained for each predicate of each graph of the RDF dataset. As known in the art, there are several known data structures for obtaining adjacency matrices. Any data structure for an adjacency matrix may be used for obtaining the read-only data structure of the invention. The mere requirement is that the read-only data structure can implement the concept of adjacency matrix and that the read-only data structure fits in a fix memory layout size, which is the case for most of the read-only data structures.

In examples, the adjacency matrix of each indexed predicate may be obtained by performing a vertical partitioning for each predicate of the RDF database. As known *per se,* vertical partitioning is a database design technique where RDF data are divided into separate datasets or partitions based on the properties or predicates used in the triples. This technique is commonly used to optimize storage, retrieval, and querying of RDF data, especially in scenarios where certain subsets of the data are accessed more frequently than others.

The vertical partitioning may be performed as known in the field for example as described in document Abadi, D.J., et al., "Scalable semantic web data management using vertical partitioning.", In Proceedings of the 33rd international conference on Very large databases, September 2007, pp. 411-422.

In examples, the vertical partitioning may be a standard K2-triple partitioning as described in the document ÁLVAREZ-GARCÍA, S., et al., "Compressed vertical partitioning for efficient RDF management.", Knowledge and Information Systems, 2015, vol. 44, no 2, p. 439-474,

In examples, a dk²-tree - which is a dynamic variant of the k2-tree partitioning as described in the document Nieves R. Brisaboaa, et al., "Compressed Representation of Dynamic Binary Relations with Applications", arXiv:1707.02769. may be used for generating K2-triple partitioning..

In examples, the vertical partitioning may be performed by using a two static B+trees, where a first static B+tree expresses subject-to-object (S,O) correspondence and the second one expresses object-to-subject (O,S) correspondence. Two S-trees are obtained; S-Tree data structure is discussed here https://en.algorithmica.org/hpc/data-structures/s-tree/.

In examples, the vertical partitioning may be performed by using a Static XAM Tree engraved from a XAMTree as a read-only XAMTree. XAMTree is discussed in document EP22306928.7 filed on December 16, 2022. This document is incorporated by reference herein. Implementation examples of XAMTree are discussed from page 20 to page 47 of document EP22306928.7 and are also incorporated by reference.

Still in reference to **180** of **FIG. 1****,** the *PredicateEntry* record of each predicate is now discussed. Once an adjacency matrix is obtained, one needs to identify which predicate it refers to. This is the purpose of the PredicateEntry record.

In an example, the PredicateEntry record may comprise:
- an unsigned integer, e.g. of 64 bits, that is called index and that identifies the predicate name in the dictionary;
- an unsigned integer, e.g. of 64 bits, called count, that represents the number of distinct SO (Subject, Object) pairs in the predicate. This statistic can be used by a SPARQL query engine to optimize the join ordering of a query. This field is optional in the PredicateEntry;
- an unsigned integer, e.g. of 64 bits, offset indicating the position of the adjacency matrix data among the sets of adjacency matrices of a graph of the RDF dataset;
- an unsigned integer, e.g., of 8 bits, called type and that indicates how to interpret matrix according to the method used for building the adjacency matrices;
- an unsigned integer, e.g. of 8 bits, called flags. This optional field is used to tag the predicate if it has a special semantic that can be used by a SPARQL query engine for query optimization. For example it could participate in RDFS entailment (*https:*//*www.w3.org*/*TR*/*rdf11-mt*/*#rdfs-entailment*) or be part of a National Language Support (NLS, *https.*//*en.wikipedia.org*/*w*/*index.php?title=Notional_Longuage_Support&redirect= no*). Other dedicated semantics could be found;
- 14 bytes are optionally reserved for future usage and/or padding purpose.

In examples, the read-only data structure may further comprise an indexed list **130** of the one or more graphs of the RDF dataset. A graph section of the read-only data structure may comprise the indexed list of graphs of the RDF dataset, and also designates an array of *GraphEntry.* For each graph of the indexed list corresponds a *GraphEntry.* Each GraphEntry describes a respective graph, for the purpose of identifying the graph name in the Dictionary **150, 160, 170.**

In an example, the GraphEntry may comprise:
- an unsigned integer, e.g. of 64 bits, called index for identifying the graph name in the Dictionary;
- an unsigned integer, e.g. of 64 bits, called offset for designating the position of a PredicateEntry array that has been previously discussed. This allows to know the predicate exists in the graph;
- an unsigned integer, e.g. of 32 bits, called *nb_predicate,* designating the number of PredicateEntry in the graph;
- an optional reserved 32 bits for padding and/or possible future extension.

In examples, the read-only data structure may further comprise a Header 100 at beginning of the read-only data structure (the ROSA file), and a Footer 190 at the end of the read-only data structure. The read-only data structure may be a binary file and/or the Header may be a fixed size Header and/or the Footer may be a fixed size Footer. The ROSA engraving algorithm may be one pass, so most of the references are backward. Alternatively, the references may be forward, but at the cost of requiring multiple passes to create the ROSA file. Interestingly, on backward references, and therefore random access in the memory map file, is in line with modern computers using SSD (Solid State Drive) where random access is cheap. It is to be understood that SSD is not a requirement on the invention and that the ROSA file may be stored on any type of memory. The Header is read at opening of the ROSA file so as to identify the file content and the Footer at the end with backward references to navigate inside the sections of the file. Navigation in a file using backward references or forward references is performed as known in the art.

In examples, the Header 100 may comprise basic records. In an example, the Header may comprise a "magic" record that is unsigned integer number, e.g. of 32 bits, that is used to uniquely identify the type of the ROSA file. Alternatively or additionally, the Header of the ROSA file may comprise a version record that is an unsigned integer tag, e.g., of 32 bits, that is used to identify the current version of the read-only data structure format. Alternatively or additionally, the Header may comprise an "end" record that is an unsigned integer, e.g. of 64 bits; the "end" record is the offset to the end of the Footer section, that is to the Footer record position, to know where the ROSA file ends, and thus where the memory layout ends.

Examples of the Footer at the end with backward references are now discussed, being understood that the Footer may be organized in different ways in other examples. In these examples, the Footer record is more complex than the Header. Fields are added backward in order to keep the Footer upward compatible if a minor change has to be added in a future revision. Like the Header record, the Footer contains a magic version to identify it and similarly an offset to the starting position of the Rosa.

In these examples of the Footer, it may be possible to add extensions to a plain ROSA file. For example, a dedicated data structure may be added to index RDF data in regard to access control security. Flags may be used in the Footer, the flags indicating if such optional extensions are present. According to these flags, there may be additional records in the Footer to address them, like for example a security entry record with the section representing the additional data structure and the count of entries in this data structure.

In these examples of the Footer, the Footer may have a SHA-256 of the ROSA payload; the payload of the read-only data structure comprises the sections (and therefore the data) between the end of the Header and the beginning of the Footer. SHA-256 is known *per se.* SHA-256 is the acronym of Secure Hash Algorithm 256-bit, which is a cryptographic hash function that belongs to the SHA-2 family of hash functions. The output of SHA-256 is a fixed-size 256bits (32Byte) hash value, typically represented as a hexadecimal number. This SHA-256 may be used to check the integrity of the ROSA file. Additionally or alternatively, this SHA-256 may be used to give a reliable way of detecting the difference between an out-of-date SHA-256 output of a summary of the RDF dataset versus an invalid summary of the RDF dataset. The summary of the RDF dataset may be constructed as discussed in the document EP22306798.4 filed on 06 December 2022.

In examples, each entry of the read-only data structure may have a maximum size comprised between 32 and 256 bits. The expression "entry of the read-only data structure" means that the individual elements (or items) in the read-only data structure cannot have a size that exceeds 256 bits and have a minimum size of 32 bits. In the event the minimum size is not reached, padding may be used in order to comply with the minimum size. In an example, the minimum size may be 32 bits, and the maximum size may be 64 bits. In another example, each individual element (or item) may be encoded on 32 bits. In a further example, each individual element (or item) may be encoded on 64 bits. A fixed size makes easier the building of the read-only data structure.

In an example, the read-only data structure (the ROSA archive) may be restricted to 2³² entries. This improves the compression of the read-only data structure. Indeed, instead of having one huge ROSA file, several one can be queried, thus removing the necessity of one huge ROSA file. In addition, cloud storage access bandwidth is detrimental to huge flat file download. Therefore, the read-only data structure restricted to 2³² entries is adapted to common cloud storage restrictions.

It is to be understood that the read-only data structure may be restricted to 2⁶⁴ entries, or even 2¹²⁸ entries, or even 225⁶ entries, without changing the invention: it is a trade-off of consuming more memory and accept more entries. As already discussed, the read-only data structure may be memory-mapped and the overall size of the read-only data structure may therefore be restricted by the memory available on the system.

The read-only data structure on **FIG. 1** shows an example where all the sections discussed hereinabove are represented. It is to be understood that the read-only data structure according to the invention is not limited to that specific example. Especially, the minimum requirements of the read-only data structure are the presence of the indexed list **130** of the one or more graphs of the RDF dataset, for each graph of the RDF dataset, an indexed list **140** of predicates of the graph, a dictionary **150** mapping each RDF term of the dataset to a respective index and inversely **160;** and for each predicate indexed in the indexed list of predicates of each graph, an adjacency matrix **180** representing a group of tuples of the RDF dataset.

A comparison between the read-only data structure of the invention and the Apache Parquet is now discussed. It is reminded that Apache Parquet belongs to the field of relational databases while the present invention belongs to the field of graph database. Even if the relational world and the graph world represent two different paradigms that are not related by anything other than a purpose of data storage, the comparison shows improvements of the read-only data structure of the invention. Parquet files are organized in such a way that it is an enumeration of slab of columns. Each slab contains its own metadata, some statistics, a slab has its own dictionary, and can be manipulated by itself. It is intended to be manipulated without any join, and it is quite efficient if the table contains a lot of columns and if the query use only a few. Parquet files are not indexed but it is possible to skip lot of data if the query clause criteria can evict a lot of slats by using the statistics (ex, time range query and slab are temporally organized). For the ROSA file, 80% of RDF Graph disk usage is in the storage of the dictionary, and SPARQL query performs a lot of joins as the query engine uses dictionary indices to perform join without any access in the dictionary. By the way most of the expensive time is performed while accessing the adjacency matrices which cost only 20% of the memory usage. If a query uses only 10% of the predicate (in size) at worst a query on ROSA archive will use 2% of corresponding size.

In reference to **FIG. 2****,** it is now discussed a computer-implemented method for storing modifications to be applied on the read-only data structure, that is, for incrementally updating a ROSA file. As already mentioned, the present invention aims at providing a fast read access, compressed, updatable data structure for RDF datasets; in other words, an RDF archive that can be updated near real-time whatever the size of the RDF knowledge graph.

The update of the ROSA file is made through the W3C standard SPARQL query language. SPARQL 1.1 Update enables to represent changes as an intentional or an extensional definition. An intentional definition gives meaning to a term by specifying necessary and sufficient conditions for when the term should be used. This is the opposite approach to the extensional definition, which defines by listing everything that falls under that definition; all the triples of the RDF dataset to be updated are listed. Updating the RDF dataset encompasses writing or modifying or deleting at least one triplet of the RDF dataset.

In examples, the update of the read-only data storage may be performed using a CDC technique. As known *per se,* CDC (acronym of Change Data Capture) is a technique used to identify and capture changes made to data in the database. The primary purpose of CDC is to recognize and track changes so that other systems or processes can react accordingly. This is particularly useful in scenarios where it is essential to keep multiple data sources synchronized or to propagate changes to downstream systems.

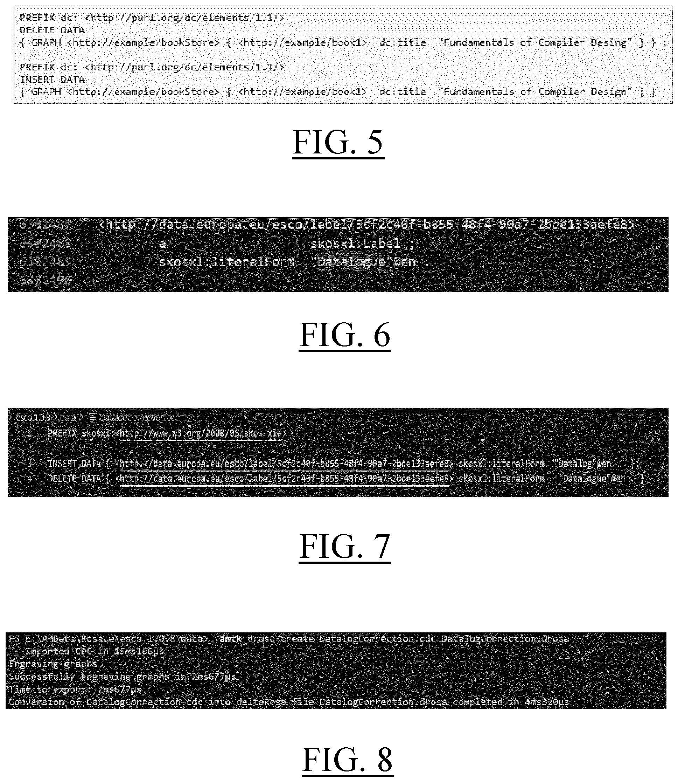

**FIG. 5** is an example where the CDC for SPARQL updates is defined as a restriction of SPARQL 1.1 Update that enables to represent changes only as an extensional definition. It is to be understood that this is an example of how modifications of triples can be represented.

It is possible to use any other representation without changing the invention, as long as the information of the modification of which triple(s) in which graph(s) is given. This is now discussed.

Referring now to **FIG. 2**, a first list of added and/or deleted tuples of the RDF dataset is obtained **S200.** By "obtaining first list of added and/or deleted tuples of the RDF dataset" it is meant providing the first list of added and/or deleted tuples of the RDF dataset to the method.

Then, a first read-only data structure is computed **S210.** The computed first read-only data structure is defined as discussed herein above, which means that a (first) ROSA file is computed from the first list of added and/or deleted tuples to be applied on the RDF dataset. The (first) ROSA file of the first list of added and/or deleted tuples of the RDF dataset is built so that, for each predicate of the added and/or deleted tuples of the RDF dataset of the first list, a first adjacency matrix represents the added tuples of the RDF database comprising the same predicate. Additionally, a second adjacency matrix represents the deleted tuples of the RDF database comprising the same predicate.

Then, **S220,** the computed read-only data structure is stored into a first file.

The first file that is stored is also referred to as "Delta ROSA". Delta ROSA is a representation of the CDC information, e.g., it may be a binary representation of the CDC representation. Delta ROSA is based on a ROSA file format, by construction. Consequently, a Delta ROSA file inherits all properties of a ROSA file, mainly zero copy read property and compactness property. Generating a Delta ROSA depends only on the size of the changes, not on the size of the ROSA file (that is, the snapshot file of the RDF dataset, or archive); Delta ROSA is independent of the ROSA file: no access to ROSA file is required at the time of building the Delta ROSA. This involves a clear advantage in performance for generating Delta ROSA files, as the ROSA file can be huge despite the ROSA file compression scheme.

The Delta ROSA file is a new file format similar to ROSA. Like ROSA, it contains a list of read-only adjacency matrices and a read-only dictionary. Whereas adjacency matrices in a ROSA file describe a set of triples (ROSA contains one adjacency matrix per predicate and per graph), Delta ROSA contains two adjacency matrices per predicate and per graph. One is describing the set of triples created by operations described in the CDC files, and the other one is describing the set of triples deleted by the same operations. This data structure describes the total result of these operations: for example, if a triple is added, then deleted by operations in the CDC files, then it will not appear at all in the Delta ROSA file.

After **S220** of **FIG. 2****,** a second list of added and/or deleted tuples of the RDF dataset may be obtained. A second read-only data structure is computed, and this second read-only data structure is defined as discussed herein above, which means that a (second) ROSA file is computed. This (second) ROSA file will be referred to as second Delta ROSA file once stored. The (second) ROSA file is computed from the first list of added and/or deleted tuples to be applied on the RDF dataset and from the second list of added and/or deleted tuples to be applied on the RDF dataset. As for the first ROSA file computed from the first list of added and/or deleted tuples, this second ROSA file is built so that, for each predicate of the added and/or deleted tuples of the RDF dataset of the first and second lists, a first adjacency matrix represents the added tuples (of the first and second lists) of the graph database comprising the same predicate. Additionally, a second adjacency matrix represents the deleted tuples (of the first and second list) of the graph database comprising the same predicate.

Then, the computed read-only data structure is stored into a second file, thus forming a second Delta ROSA file.

The same process may be repeated each time a new list of added and/or deleted tuples of the RDF dataset is obtained, e.g. a third, fourth...n^{th} list of added and/or deleted tuples on the RDF dataset, e.g. the computed n^{th} Delta ROSA file has been computed from the first, second, to n^{th} lists of added and/or deleted tuples thereby obtaining a chain of modifications. This means that to obtain the full history up to the n^{th} list, one needs only the n^{th} Delta ROSA file, which is important for performance.

There is no need to keep all history of the RDF knowledge graph, only one snapshot of the RDF knowledge graph is retained, as a ROSA file, with a chain of Delta ROSA files that represent the modifications to be applied on the ROSA file, that have been received.

Thanks to the adjacency matrices of the Delta Rosa file or of the Delta ROSA files of the chain of Delta ROSA files, it is easy to list triples that have been added or deleted by a list of operations. The Delta ROSA file(s) may be then later used to alter the result of a BGP operation on a ROSA file (the archive), by adding or removing triples from the result according to the content of the DELTA ROSA file. BGP and the use of the Delta ROSA file will be discussed herein after in more details.

In examples, the ROSA file (the archive) may comprise two or more graphs, as already discussed. In this case, the obtaining of a list of added and/or deleted tuples of the RDF dataset may comprise obtaining a list of added and/or deleted tuples of the RDF dataset for each graph of the RDF set, and the computing of the read-only data structure for the obtained a list of added and/or deleted tuples may further comprise computing a first adjacency matrix and second adjacency matrix for each graph of the RDF set.

In examples, once the chain is above a threshold, a new full snapshot as the ROSA file (the archive) may be regenerated. Regenerating means computing a new archive that comprises the updates of the Delta ROSA chain. After the regeneration, the previous archive is swapped with the new one. The Delta ROSA chain may be suppressed as the updates have been entered in the "original" RDF knowledge dataset. This threshold is a trade-off between CPU cost for regeneration and performance cost at read query (memory cost of the DELTA ROSA and CPU cost to use them) that can be parametrized depending on the application needs. The threshold might also be based on the size of the chain of ROSA files, the lifetime of the ROSA chain, etc...

In examples, a mapping may be computed between the indices of the dictionary of the RDF dataset and the indices of each dictionary of each list of added and/or deleted tuples of the RDF dataset. The computed mapping is then stored into a file. This mapping allows to avoid looking up values in the ROSA's dictionary, and then look up indices in the Delta ROSA's dictionary for each triple from the result of a future BGP operation. Indeed, BGP operations on a ROSA file return the index of RDF terms defined in the ROSA's dictionary, rather than the value of triples. Even though the Delta ROSA file has a local dictionary, there is no reason for that local dictionary to contain the same indices than the ROSA File's dictionary. To that aim, a new mapping file format is defined. It contains a data structure (e.g. an adjacency matrix) that allows efficient lookup of ROSA indices from Delta ROSA indices and vice-versa. By nature, this mapping can only be computed from a ROSA file and a Delta ROSA file. This file is called DROSAM, which stands for Delta ROSA Mapping. A DROSAM may be computed every time a new Delta ROSA file has been computed. Alternatively, a DROSAM may be computed every time a new Delta ROSA file is in use..

Hence, the modifications to be applied on the archive of the RDF knowledge dataset are stored into a one or more Delta ROSA files, the set of Delta ROSA files that may form a chain of modifications to be applied on the archive. A mapping may be computed and stored in a file called DROSAM for the purpose of improving the identification of ROSA indices from Delta ROSA indices and inversely, thereby improving the efficiency of future BGP operations.

In reference to **FIG. 3****,** it is now discussed a method for SPARQL querying on the read-only data structure of the present invention. The query is performed on the ROSA file (the archive) and on the latest Delta ROSA file that has been computed..

At **S300,** a SPARQL query is obtained. SPARQL is the W3C recommendation for querying RDF data and is a graph-matching language built on top of patterns of RDF tuples. By a "pattern of RDF tuples" it is meant a pattern/template formed by an RDF graph. In other words, a pattern of RDF tuples is an RDF graph (i.e., a set of RDF triples) where subject, predicate, object, or label of the graph can be replaced by a variable (for a query). SPARQL is a query language for RDF data able to express queries across diverse data sources, whether the data is stored natively as RDF or viewed as RDF via middleware. SPARQL is mainly based on graph homomorphism. A graph homomorphism is a mapping between two graphs that respects their structure. More concretely, it is a function between the vertex sets of two graphs that maps adjacent vertices to adjacent vertices.

SPARQL contains capabilities for querying required and optional graph patterns along with their conjunctions and disjunctions. SPARQL also supports aggregation, subqueries, negation, creating values by expressions, extensible value testing, and constraining queries by source RDF graph. This means SPARQL queries needs to answer to eight different triple patterns possible in the SPARQL. Such eight triple patterns include (S,P,O), (S,?P,O), (S,P,?O), (S,?P,?O), (?S,P,O), (?S,?P,O), (?S,P,?O), and (?S,?P,?O) in which variables are preceded in the pattern, by the symbol ?. Variables are the output of triple patterns and may be the output of the SPARQL query. In some examples, variables may be the output of a SELECT query. The output of a SPARQL query may be built using the variables (e.g., aggregators like summation). Variables in a query may be used to build a graph homomorphism (i.e., intermediary nodes necessary to get the result of the query). In some examples, variables in a query may be neither used for output nor intermediary result.

As known *per se,* BGP (acronym of Basic Graph Pattern) refers to a simple form of RDF query pattern used in RDF query languages like SPARQL (SPARQL Protocol and RDF Query Language). A BGP is essentially a set of triple patterns, and thus BGP allows to express a pattern of triples to match in RDF data.

The SPARQL query may be obtained by a SPARQL query engine. As known *per se*, the SPARQL query engine is the systems designed to process SPARQL queries and retrieve information from RDF data stores. The SPARQL query engine takes SPARQL queries as input and process them against RDF data. It is responsible for interpreting the queries, optimizing them for efficient execution, and retrieving the relevant information from the RDF graph.

After the obtaining SPARQL query by the SPARQL query engine **S300,** the ROSA file and the Delta ROSA files (that is, the chain of Delta ROSA files) are obtained **S310** by the system. By "obtaining the ROSA file and the Delta ROSA files", it is meant providing the database to the method. In examples, such an obtaining or providing may mean or comprise either downloading said ROSA file and the Delta ROSA files (e.g., from an online database, or an online cloud), or retrieving the database from a memory (e.g., a persistent memory), and/or memory-mapping the ROSA file and the Delta ROSA files.

Next, **S320,** for each triple pattern of the query, are found the tuples answering to the triple pattern of the query into the read-only data structure (the ROSA file). This is performed by the query engine as known in the art. As a result of the query, a first set of results is obtained.

Then, **S330,** the followings steps are performed for each triple pattern of the query in the chain of Delta ROSA files. Firstly, it is determined whether tuples answering the triple pattern are to be deleted and/or added.

In the negative, the results of the query are those found in the first set of results.

In the positive, two situations can arise:
i) if tuples are to be deleted as inferred from the chain of Delta ROSA files, the tuples are removed from the first set of results; and/or
ii) if tuples are to be added as inferred from the chain of Delta ROSA files, the tuples are added to the first set of results.

Once step **S330** has been achieved, the first result comprises the tuples to be added and no more of the tuples to be removed. Hence, a SPARQL query has been performed on an archive that had been modified. A mapping stored in the DROSAM file may be used too for improving efficiency (in terms of resources consumptions and speed of execution) of the BGP operations.

**FIG. 3** shows an example of a method that is carried out by so-called ROSACE system - ROSACE that stands for ROSA Combination ENGINE-. The ROSACE Engine system enables to define an RDF dataset as the union of a state of the RDF knowledge dataset materialized by a ROSA file and a set of changes applied to this state materialized by a (latest) Delta ROSA file, a DROSAM file - that can be computed from the ROSA file and the Delta ROSA file when the Delta ROSA file is first used- and then to apply read statements on this dataset. ROSACE domain of work may be when set of changes are small compared to the state of RDF Data, removing the need to regenerate the ROSA file when the changes are small compared to the size of the ROSA file.

In reference to **FIGs. 6** to **10****,** an example of a scenario of use of the ROSACE system is discussed. In this scenario, an error was introduced inside an RDF dataset called ESCO - ESCO is a multilingual classification of European Skills, Competences, and Occupations. ESCO is part of the Europe 2020 strategy. Esco Homepage (europa.eu))-. The error is that "Datalogue" is written instead of "Datalog" in English, as seen on FIG. 6. The objective of this scenario is to correct this without regenerating the ROSA file representing the ESCO dataset. Thus, the starting point is a ROSA file containing the version 1.0.8 of ESCO and the error, two SPARQL requests:
- one that counts the number of instances of skosxklabel; and
- one that shows the value of skosliteralForm for the uri.. <...e8>.

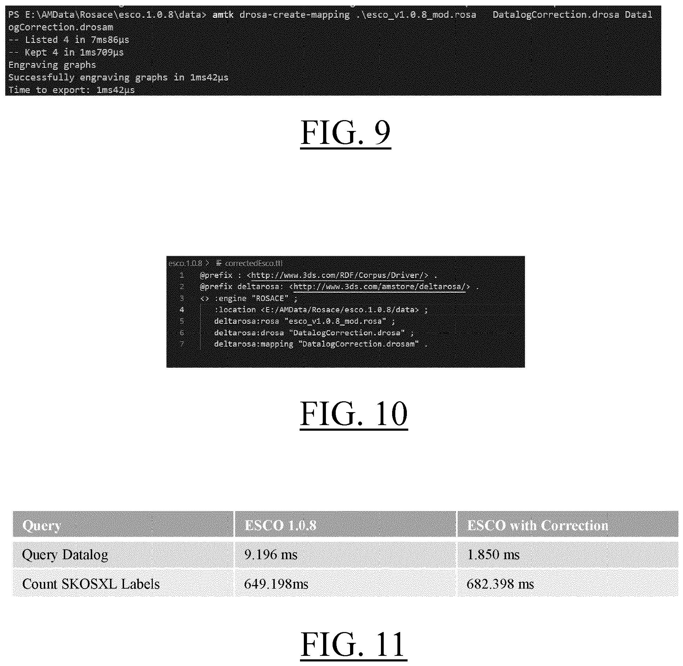

As shown on **FIG. 7**, a correction under the form of a CDC is obtained. Then, a Delta ROSA file is computed as a result of the import of the CDC, as shown on **FIG. 8****.** Next, on **FIG. 9**, a DELTA ROSAM file is computed for mapping the index of the Delta ROSA file with the index of the ROSA file. Finally, on **FIG. 10**, the hybrid dataset is obtained where the hybrid dataset comprises the ROSA file, the Delta ROSA file and the DELTA ROSAM file. It is therefore possible to perform query on the ROSA file that will take into account the modification stored on the Delta ROSA file.

**FIG.11** shows results of experiments made with an implementation of the present invention. It is to be understood the response time of a query may vary depending on the query that have been performed. Importantly, one notices with these results that the queries - a Datalog query and a count SKOSXL labels - present a same order of magnitude.

One or more examples of the read-only data structure may be combined. The examples of the read-only data structure may apply indifferently on RDF triples or RDF quads. For the sake of explanation, the notion of quad is now discussed. In examples, the RDF tuples of the RDF dataset may be RDF quads. An RDF quad may be obtained by adding a graph label to an RDF triple. In such examples, an RDF tuple includes the RDF graph. A standard specification has been published by W3C to specify RDF Quads (also referred to as N-Quads), see for example "RDF 1.1 N-Quads, A line-based syntax for RDF datasets", W3C Recommendation 25 February 2014. An RDF quad may be obtained by adding a graph name to an RDF triple. A graph name may be either empty (i.e., for a default or unnamed graph) or an IRI (i.e., a graph IRI). In examples, a predicate of the graph may have a same IRI as the graph IRI. The graph name of each quad is the graph that the quad is part of in a respective RDF dataset. An RDF dataset, as known per se (e.g., see *https:*//*www.w3.org*/*TR*/*rdf-sparql-query*/*#rdfDataset*) represents a collection of graphs. In all the examples that have been discussed hereinabove, the term RDF tuple (or tuple) indifferently refers to an RDF triple or an RDF quad, unless the use of one or the other is explicitly mentioned. Hence the knowledge RDF dataset may comprise RDF triples or RDF quads. When the knowledge RDF dataset comprises RDF quads, the BGP may be a quad pattern with additionally having the label of the graph as the query variable. In particular examples where the method obtains one or more adjacency matrices each as representations of groups of tuples, subject and object may be queried on one adjacency matrix.

## Claims

1. A computer-implemented read-only data structure for archiving a snapshot of a RDF dataset into a file, the RDF dataset comprising one or more graphs, the read-only data structure that can be directly queried using all possible triple patterns of a SPARQL query engine, the data structure comprising:
- an indexed list of the one or more graphs of the RDF dataset;
- for each graph of the RDF dataset, an indexed list of predicates;
- a dictionary mapping each RDF term of the dataset to a respective index and inversely;
- for each predicate indexed in the indexed list of predicates of each graph, an adjacency matrix representing a group of tuples of the RDF dataset, thereby obtaining a complete representation of the RDF dataset that can be directly queried using all possible triple patterns of a SPARQL query engine.

2. The computer-implemented read-only data structure of claim 1, wherein the dictionary has a fixed length when each value of the dictionary has a length that is equal or smaller than a predetermined threshold, preferably the predetermined threshold is 2, 4 or 8 Bytes.

3. The computer-implemented read-only data structure of claim 2, wherein the dictionary has a variable length when at least one value of the dictionary has a length larger than the predetermined threshold, each value having a length larger than the predetermined threshold is indexed to and stored in an overflow data structure, the overflow data structure being part of the dictionary.

4. The computer-implemented read-only data structure of anyone of claims 1 to 3, wherein at least parts of the dictionary are encoded, preferably values are encoded using the IEEE Standard for Floating-Point Arithmetic (IEEE 754-2019 or previous versions) or prefix of values are encoded using a hexadecimal key.

5. The computer-implemented read-only data structure of anyone of claims 1 to 4, wherein the dictionary comprises two or more dictionaries, preferably each dictionary maps each RDF term of a RDF datatype of the dataset to a respective index and inversely or each dictionary maps each RDF term of an IRI prefix of the dataset to a respective index and inversely.

6. The computer-implemented read-only data structure of anyone of claims 1 to 5, wherein the adjacency matrix for each indexed predicate is obtained by performing a vertical partitioning for each predicate of the RDF database, preferably the vertical partitioning is performed by a technique selected among:
- a standard K2-triple, preferably built from a Dynamic K2;
- two static B+trees, where a first static B+tree expresses subject-to-object (S,O) correspondence and the second one expresses object-to-subject (O,S) correspondence;
- a static XAM Tree engraved from a XAMTree as a read-only XAMTree.

7. The computer-implemented read-only data structure of anyone of claims 1 to 6, wherein each entry of the data structure has a maximum size comprised between 32 and 256 bits, preferably between 32 bits or 64 bits, more preferably the size of each entry is encoded on 32 bits or 64 bits.

8. The computer-implemented read-only data structure of anyone of claims 1 to 7, wherein the read-only data structure is a binary file comprising:
- a Header comprising an offset to an end of a Footer record position;
- a section comprised between the Header and the Footer;
- the Footer comprising an offset to a starting of the Header record position; wherein the section stores:
- the dictionary;
- for each graph, the indexed list of predicates of the graph and the adjacency matrix of each predicate indexed in the indexed list of predicates of the graph.

9. A computer-implemented method for storing modifications to be applied on a read-only data structure according to anyone of claims 1 to 8, comprising:
- obtaining a first list of added and/or deleted tuples of the RDF dataset;
- computing a first read-only data structure defined according to any one of claims 1 to 8, wherein for each predicate of the added and/or deleted tuples of the RDF dataset of the first list:
-- a first adjacency matrix represents the added tuples of the RDF dataset comprising the same predicate; and/or
-- a second adjacency matrix represents the deleted tuples of the RDF dataset comprising the same predicate; and
- storing the computed read-only data structure into a first file.

10. The computer-implemented method of claim 9, further comprising:
- obtaining a second list of added and/or deleted tuples of the RDF dataset;
- computing a second read-only data structure defined according to any one of claims 1 to 8, wherein for each predicate of the added and/or deleted tuples of the RDF dataset of the first and second lists:
-- a first adjacency matrix represents the added tuples of the RDF database comprising the same predicate; and/or
-- a second adjacency matrix represents the deleted tuples of the RDF database comprising the same predicate; and
- storing the computed read-only data structure into a second file, thereby by forming modifications to be applied on the read-only data structure.

11. The computer-implemented method of claim 9 or 10, wherein the obtaining further comprises obtaining a list of added and/or deleted tuples of the RDF dataset for each graph of the RDF set; and wherein the computing comprises computing a first adjacency matrix and second adjacency matrix for each graph of the RDF set.

12. The computer-implemented method of anyone of claim 9 to 11, further comprising:
- computing a mapping between the indices of the dictionary of the RDF dataset and the indices of each dictionary of each list of added and/or deleted tuples of the RDF dataset; and
- storing into a file the computed mapping.

13. A computer-implemented method of SPARQL querying on a read-only data structure stored into a file according to anyone of claims 1 to 8 and on a computed read-only data structure stored into a first file according to anyone claims 9 to 12, comprising:
- obtaining a SPARQL query by a SPARQL query engine, the SPARQL query comprising at least one triple pattern;
- obtaining the read-only data structure according to anyone of claims 1 to 8 and the computed read-only data structure stored into a file according to anyone claims 9 to 12;
- for each triple pattern of the query, finding the tuples answering to the triple pattern of the query into the data structure according to anyone of claims 1 to 8, thereby obtaining a first set of results; and
- for each triple pattern of the query, in the computed read-only data structure into a file according to anyone of claims 9 to 12:
-- determining if tuples answering the triple pattern are to be deleted and/or added;
-- if tuples are to be deleted, removing the tuples from the first set of results;
-- if tuples are to be added, adding the tuples to the first set of results.

14. A computer program comprising instructions for performing the method of any of claims 9 to 12 and/or the method of claim 13.

15. A system comprising a processor coupled to a memory, the memory having recorded thereon the computer program of claim 14.
